# EUROPEAN PATENT SPECIFICATION

(11) **EP 0 492 720 B1**
(45) Date of publication and mention of the grant of the patent: **14.02.1996**
(21) Application number: 91203336.2
(22) Date of filing: 18.12.1991
(51) Int. Cl.: B32B 27/32

(54) **Heat-shrinking, multi layer films based on olefinic resins also containing non-olefinic resins**
Wärmeschrumpfbare Mehrschichtfolien auf Basis von Olefinpolymeren, die auch nicht-olefinische Harze enthalten
Films multicouché rétractable à chaud à base de resines oléfiniques et contenant aussi resines non-oléfiniques

(30) Priority: 24.12.1990 IT 2253090
(43) Date of publication of application: 01.07.1992
(73) Proprietor: POLIFILMS S.r.l., I-20014 Nerviano (Milano) (IT)
(72) Inventor: Corbani, Marino, I-20020 Arese-Milan (IT)
(74) Representative: Appoloni, Romano

(56) References cited:
- EP-A- 0 247 896
- GB-A- 2 115 348
- US-A- 4 343 852

## Description

Heat-shrinking, multi-layer films based on polyolefinic resins, are well-known.

In particular, for example from U.S. Patent 4.597.920 to Du Pont, films of this kind are known, which contain linear, low-density copolymers of ethylene with specific alpha-olefins, with such films being endowed with considerably good optical properties and an extremely good whole of other physical properties and shrinking behaviour.

Heat-shrinking films consisting of oriented polyethylene and various ethylene copolymers are well-known, for example from U.S. Patents 3,299,194 and 3,663,662 to Du Pont.

From U.S. Patent No. 4,532,189 to Grace, in particular, multi-layer films of such a kind are known, which are constituted by an inner layer comprising linear, low-density polyethylene or linear, medium-density polyethylene, and two outer layers comprising a mixture with a content of an ethylene-propylene copolymer comprised within the range of from 70 to 90% by weight and with a content of a propylene omopolymer comprised within the range of from 10 to 30% by weight.

Among the most important mechanical characteristics of such heat-shrinking films, the (percent) shrinking rate, i.e. the decrease in linear dimension -- as measured in a given direction -- the film undergoes when is submitted to high temperatures while it is not kept under tension; the shrinking force, i.e. the force which a film generates per unit area of his transversal section during its shrinking; the high strength of the welded joints; the tearing strength, i.e. the stress value at which the film begins to get torn, are to be cited. Among optical characteristics of such films, in particular, gloss and transparency of the material are important.

A purpose of the present invention is to provide heat-shrinking multi-layer films endowed with an improved shrinking force, i.e. a lower shrinking force relatively to films known from the prior art, a higher shrinking percentage, an improved welding strength, and a good tearing strength is retained in comparison with the films known from the prior art.

Furthermore, the obtainment of improved optical characteristics is desired.

In order to achieve such a purpose, the present invention proposes a heat-shrinking, multi-layer film based on polyolefinic resins, characterized in that said film contains an inner layer which comprises linear, low-density polyethylene (LLDPE), and two outer layers comprising a mixture of an ethylene-propylene copolymer (EPC) with an amorphous non-olefinic resin having a number average molecular weight comprised within the range of from 500 to 2,000, and with a softening point comprised within the range of from 100 to 150°C, selected from among the following classes: polymers of saturated aliphatic and alicyclic hydrocarbons; polyterpenes; resins derived from indene; non-olefinic, petroleum resins; pine resins; rosin resins; phenolic resins; hydrogenated polycyclopentadienes.

In the following disclosure, by the expression "low-density linear polyethylene" (LLDPE), a copolymer of ethylene and butene, octene, hexene (up to a maximum value of 8%), with a density comprised within the range of from 0.91 to 0.925, and in which the polymeric molecules comprise long chains, nearly completely free from, or completely free from, branchings, is preferably understood.

By the expression "ethylene-propylene copolymer" (EPC), a copolymer constituted by ethylene and propylene monomers in which propylene molecules are present as the main consituent, and ethylene molecules are present as the minor component, is preferably understood.

According to a first form of practical embodiment of the present invention, in a multilayer film said inner layer is exclusively constituted by linear, low-density polyethylene. According to a different form of practical embodiment, said inner layer is constituted by a mixture of linear, low-density polyethylene with one of said non-olefinic resins which enter in the composition of said outer layer. In a form of practical embodiment of the invention, said outer layers comprise a mixture constituted by said ethylene-propylene copolymer in an amount comprised within the range of from 70 to 99% by weight and by said non-olefinic resin in an amount comprised within the range of from 30 to 1% by weight.

According to a form of practical embodiment of the invention, said inner layer is constituted by linear, low-density polyethylene as such, at 100% by weight, or by a blend thereof with one of said non-olefinic resins, containing not more than 30% by weight of said non-olefinic resin.

According to a form of practical embodiment of the present invention, the inner layer is constituted by linear, low-density polyethylene, the outer layers are constituted by a mixture of ethylene-propylene copolymer and a non-olefinic resin constituted by a saturated, alicyclic hydrocarbon resin.

In the latter form of practical embodiment, said non-olefinic resin is contained in said outer layer in an amount preferably comprised within the range of from 1 to 10% by weight. According to a further form of practical embodiment of the present invention, said inner layer is constituted by a mixture of LLDPE and said non-olefinic resin, and said outer layers are constituted by a mixture of ethylene-propylene copolymer and said non-olefinic resin.

Still according to the invention, said inner layer can be constituted by LLDPE in mixture with 5% by weight of a saturated alicyclic resin, and said outer layer is constituted by a mixture of EPC copolymer with 5% of said saturated alicyclic resin.

In order to better understand characteristics and advantages of the invention, non-limitative examples of practical embodiment thereof are reported in the following.

### Example 1

A heat-shrinking, multi-layer film is formed in which the inner layer is constituted by 100% LLDPE. The outer layers are constituted by a blend of ethylene-propylene copolymer with 5% of a saturated alicyclic hydrocarbon resin, e.g., such resin as known as on the market with the trade name "Arkon".

### Example 2

A heat-shrinking, multi-layer film according to the present invention comprises an inner layer constituted by 100% LLDPE and a pair of outer layers, which are constituted by a blend of ethylene-propylene copolymer with 10% of said saturated alicyclic hydrocarbon resin according to Example 1.

### Example 3

A further heat-shrinking, multi-layer film according to the present invention comprises an inner layer constituted by a blend of 95% of LLDPE and 5% of said saturated alicyclic hydrocarbon resin according to Example 1. Both outer layers are constituted by a blend of ethylene-propylene copolymer with 5% of said saturated alicyclic resin.

### Example 4

A heat-shrinking, multi-layer film according to the present invention comprises an inner layer constituted by 100% LLDPE and a pair of outer layers, which are constituted by a blend of ethylene-propylene copolymer with from 5 to 20% of a saturated aliphatic hydrocarbon resin, such as the one known on the market as "EASTOTAC" (Eastman Chemical).

In order to evidence the mechanical and optical characteristics of the heat-shrinking, multi-layer films according to the present invention, the films of the invention, according to Examples 1, 2 and 3 have been tested for shrinking behaviour, tearing strength and haze, as compared to a reference film of the prior art, the composition of which is as follows: inner layer constituted by a blend of linear, low-density polyethylene with an ethylene-propylene copolymer; outer layers constituted by an ethylene-propylene copolymer.

The data obtained is reported in following table:

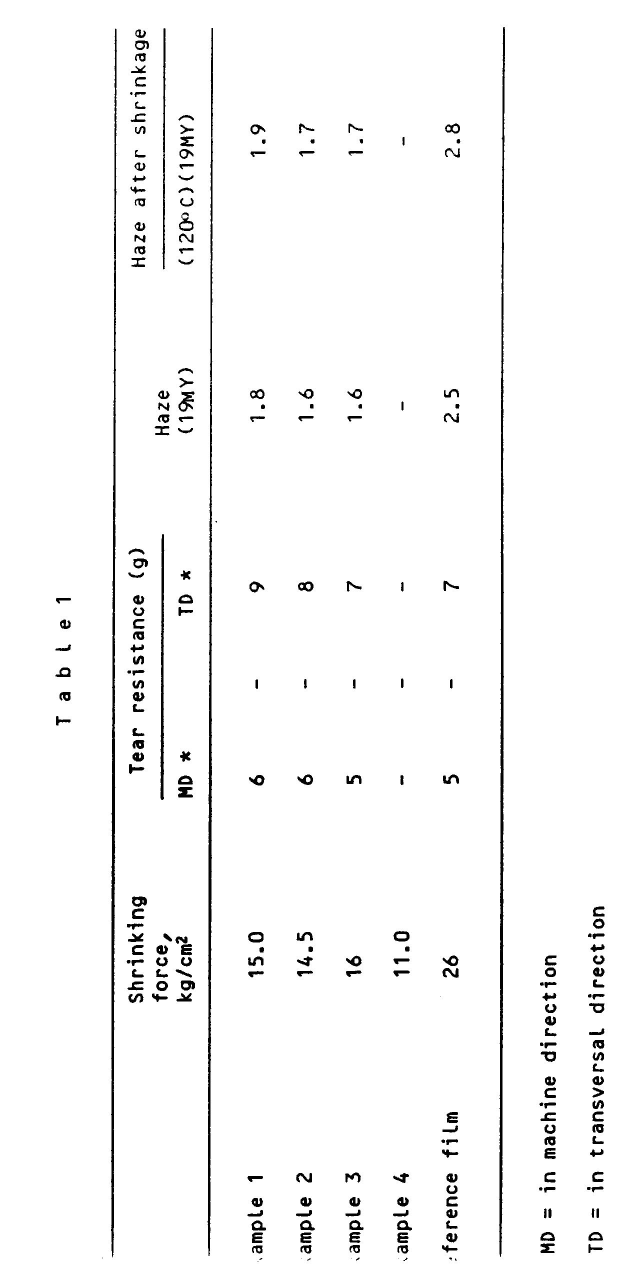

From the data reported in the above Table, the considerably better behaviour can be seen of the multi-layer films according to the Examples of the present invention, as compared to the reference film of the prior art, as regards the shrinking force and as regards haze values (which are a measure of the level of clarity of the film obtained).

As regards the tearing strength values, they are generally better than of the reference film, and have to be regarded as favourable above all in the transversal direction (TD).

Furthermore, in the experimental tests carried out, the heat-shrinking, multi-layer films according to the present invention have been shown to display a high free shrinkage at different temperatures, and, additionally, a very good strength of welded joints.

In this regard, on the film of above Example 4 the impulse welding ability was evaluated and was compared to the analogous property of the reference film according to the prior art, as detailed hereinabove. The data obtained is reported in following Table 2.

**Table 2**

| Impulse welding ability | | |
|---|---|---|
| Impulse time (seconds) | Strength of welded joint (N/mm²) | |
| | Film of Example 4 | Reference film known from the prior art |
| 0.45 | 53 | does not weld |
| 0.60 | 68 | 52 |

As it can be observed, the film according to the invention begins to form a welded joint at shorter impulse times, and hence at lower temperatures, while simultaneously retaining a high strength of the welded joint.

One may hence realize that the multi-layer films according to the present invention represent an improvement as compared to the reference films, and can consequently implement to a decidedly satisfactory extent the purposes declared hereinabove.

## Claims

1. Heat-shrinking, multi-layer film based on polyolefinic resins, characterized in that said film contains an inner layer which comprises linear, low-density polyethylene (LLDPE), and two outer layers comprising a mixture of an ethylene-propylene copolymer (EPC) With an amorphous non-olefinic resin having a number average molecular weight comprised within the range of from 500 to 2,000, and with a softening point comprised within the range of from 100 to 150°C, selected from among the following classes: polymers of saturated aliphatic and alicyclic hydrocarbons; polyterpenes; resins derived from indene; non-olefinic, petroleum resins; pine resins; rosin resins; phenolic resins; hydrogenated polycyclopentadienes.

2. Multi-layer film according to claim 1, characterized in that said inner layer is constituted by linear, low-density polyethylene.

3. Multi-layer film according to claim 1, characterized in that said inner layer is constituted by a mixture of linear, low-density polyethylene with one of said non-olefinic resins which compose said outer layer.

4. Multi-layer film according to claim 1, characterized in that said outer layers comprise a mixture constituted by said EPC copolymer in an amount comprised within the range of from 70 to 99% and said non-olefinic resin in an amount comprised within the range of from 30 to 1% by weight.

5. Multi-layer film according to claim 1, characterized in that said inner layer is constituted by LLDPE as such, at 100% by weight, or in mixture with one of said non-olefinic resins, with the amount of said non-olefinic resin being of 30% at maximum.

6. Multi-layer film according to claim 1, characterized in that it is constituted by an inner LLDPE layer and outer layers constituted by a mixture of EPC copolymer and a non-olefinic resin constituted by a saturated, alicyclic hydrocarbon resin.

7. Multi-layer film according to claim 6, characterized in that said non-olefinic resin is contained in said outer layer in an amount comprised within the range of from 1 to 10% by weight.

8. Multi-layer film according to claim 3, characterized in that said inner layer is constituted by a mixture of LLDPE and said non-olefinic resin, and said outer layers are constituted by a mixture of EPC copolymer and said non-olefinic resin.

9. Multi-layer film according to claim 8, characterized in that said inner layer is constituted by LLDPE in mixture with 5% by weight of a saturated,alicyclic resin, and said outer layer is constituted by a mixture of EPC copolymer with 5% by weight of said saturated alicyclic resin.

## Patentansprüche

1. Mehrlagen-Schrumpffolie auf der Basis von Polyolefinharzen, dadurch gekennzeichnet, daß die Folie eine innere Lage aus linearem Polyethylen niedriger Dichte (LLDPE) und zwei äußere Lagen aus einer Mischung von einem Ethylen-Propylen-Copolymer (EPC) mit einem amorphen nicht-olefinischen Harz mit einem Zahlenmittel des Molekulargewichts im Bereich von 500 bis 2.000 und mit einem Erweichungspunkt im Bereich von 100 bis 150°C enthält, ausgewählt aus den folgenden Klassen: Polymeren von gesättigten aliphatischen und alicyclischen Kohlenwasssrstoffen; Polyterpenen; von Inden stammenden Harzen; nicht-olefinischen Petroleumharzen; Fichtenharz; Kiefernharz; phenolischen Harzen; hydrierten Polycyclopentadienen.

2. Mehrlagenfolie nach Anspruch 1, dadurch gekennzeichnet, daß die innere Lage durch lineares Polyethylen niedriger Dichte gebildet ist.

3. Mehrlagenfolie nach Anspruch 1, dadurch gekennzeichnet, daß die innere Lage durch eine Mischung aus linearem Polyethylen niedriger Diche mit einem der die äußere Lage bildenden nicht-olefinischen Harze gebildet ist.

4. Mehrlagenfolie nach Anspruch 1, dadurch gekennzeichnet, daß die äußeren Lagen eine Mischung, bestehend aus dem EPC-Copolymer in einer Menge zwischen 70 und 99 Gew. % und dem nicht-olefinischen Harz in einer Menge zwischen 30 und 1 Gew.% umfassen.

5. Mehrlagenfolie nach Anspruch 1, dadurch gekennzeichnet, daß die innere Lage durch LLDPE als solches zu 100 Gew.% oder in Mischung mit einem der nicht-olefinischen Harze gebildet ist, wobei die Menge an nicht-olefinischem Harz höchstens 30 % beträgt.

6. Mehrlagenfolie nach Anspruch 1, dadurch gekennzeichnet, daß sie durch eine innere LLDPE-Lage und äußere Lagen, bestehend aus einer Mischung eines EPC-Copolymers und eines nicht-olefinischen Harzes, gebildet durch ein gesättigtes alicyclisches Kohlenwasserstoffharz, gebildet ist.

7. Mehrlagenfolie nach Anspruch 6, dadurch gekennzeichnet, daß das nicht-olefinische Harz in der äußeren Lage in einer Menge zwischen 1 und 10 Gew.% enthalten ist.

8. Mehrlagenfolie nach Anspruch 3, dadurch gekennzeichnet, daß die innere Lage durch eine Mischung aus LLDPE und dem nicht-olefinischen Harz gebildet ist und die äußeren Lagen durch eine Mischung aus EPC-Copolymer und den nicht-olefinischen Harz gebildet sind.

9. Mehrlagenfolie nach Anspruch 8, dadurch gekennzeichnet, daß die innere Lage durch LLDPE in Mischung mit 5 Gew.% eines gesättigten alicyclischen Harzes und die äußere Lage durch eine Mischung aus EPC-Copolymer mit 5 Gew.% des gesättigten alicyclischen Harzes gebildet sind.

## Revendications

1. Film multicouche rétractable à chaud à base de résines polyoléfiniques, caractérisé en ce que ledit film contient une couche interne qui comprend du polyéthylène basse densité linéaire (PE-BDL), et deux couches externes comprenant un mélange de copolymère d'éthylène/propylène (PE/C) avec une résine amorphe non-oléfinique ayant un poids moléculaire moyen compris dans la plage allant de 500 à 2 000, et un point de ramollissement dans la plage allant de 100 à 150° C, choisie dans les classes suivantes: polymères d'hydrocarbures saturés aliphatiques et alicycliques; polyterpènes; résines dérivées d'indène; résines non-oléfines de pétrole; résines de pin; résines de colophane; résines phénoliques; polycyclopentadiènes hydrogénés.

2. Film multicouche suivant la revendication 1, caractérisé en ce que ladite couche interne est constituée de polyéthylène basse densité linéaire.

3. Film multicouche suivant la revendication 1, caractérisé en ce que ladite couche interne est constituée d'un mélange de polyéthylène basse densité linéaire avec une desdites résines non-oléfiniques qui composent ladite couche externe.

4. Film multicouche suivant la revendication 1, caractérisé en ce que lesdites couches externes comprennent un mélange constitué dudit copolymère PE/C pour une quantité comprise dans la plage allant de 70 à 99 % et de résine non-oléfinique pour une quantité comprise dans la plage allant de 30 à 1 % en poids.

5. Film multicouche suivant la revendication 1, caractérisé en ce que ladite couche interne est constituée de PE-BDL, tel que à 100 % en poids, ou d'un mélange avec une desdites résines non-oléfiniques, la quantité de résine de ladite résine non-oléfinique étant de 30 % au maximum.

6. Film multicouche suivant la revendication 1, caractérisé en ce qu'il est constitué d'une couche interne de PE-BDL et de couches externes constituées de copolymère PE/C et d'une résine non-oléfinique constituée d'une résine d'hydrocarbure saturé alicyclique.

7. Film multicouche suivant la revendication 6, caractérisé en ce que ladite résine non-oléfinique est contenue dons ladite couche externe pour une quantité comprise dans la plage allant de 1 à 10 % en poids.

8. Film multicouche suivant la revendication 3, caractérisé en ce que ladite couche interne est constituée d'un mélange de PE-BDL et de ladite résine non-oléfinique, et lesdites couches externes sont constituées d'un mélange de copolymère PE/C et de ladite résine non-oléfinique.

9. Film multicouche suivant la revendication 8, caractérisé en ce que ladite couche interne est constituée de LLPDE dans un mélange contenant 5 % en poids d'une résine alicyclique saturée, et ladite couche externe est constituée d'un mélange de copolymère PE/C contenant 5 % en poids de ladite résine alicyclique saturée.
